# EUROPÄISCHE PATENTSCHRIFT

(11) **EP 0 732 997 B1**
(45) Veröffentlichungstag und Bekanntmachung des Hinweises auf die Patenterteilung: **16.05.2001**
(21) Anmeldenummer: 95931849.4
(22) Anmeldetag: 04.10.1995
(51) Int. Cl.: B44C 5/04, B32B 27/30, B32B 29/06

(54) **KUNSTSTOFF-PAPIERVERBUND IN FOLIENFORM SOWIE DESSEN VERWENDUNG ZUR HERSTELLUNG VON WITTERUNGSBESTÄNDIGEN SCHICHTPRE STOFFPLATTEN MIT OBERFLÄCHENSCHUTZ**
PLASTICS-PAPER COMPOSITE IN FOIL-FORM AND ITS USE FOR PRODUCING WEATHERPROOF LAMINATED SHEETS WITH SURFACE PROTECTION
MATERIAU COMPOSITE PLASTIQUE-PAPIER SOUS FORME DE FEUILLE ET SON UTILISATION POUR LA FABRICATION DE PLAQUES STRATIFIEES STABLES AUX INTEMPERIES, POURVUES D'UNE PROTECTION DE SURFACE

(30) Priorität: 07.10.1994 AT 190394
(43) Veröffentlichungstag der Anmeldung: 25.09.1996
(73) Patentinhaber: ISOVOLTA Österreichische Isolierstoffwerke Aktiengesellschaft, 2355 Wiener Neudorf (AT)
(72) Erfinder: PETERSHOFER, Georg, A-2355 Wiener Neudorf (AT); HORVATH, Michael, A-1220 Wien (AT)
(74) Vertreter: Dungler, Karin
(86) Internationale Anmeldenummer: AT9500190
(87) Internationale Veröffentlichungsnummer: WO9611118

(56) Entgegenhaltungen:
- EP-A- 0 216 230
- EP-A- 0 216 269
- EP-A- 0 327 095
- EP-A- 0 487 724
- WO-A-88/01575
- WO-A-90/14226
- WO-A-93/01935
- WO-A-95/06568
- AU-B- 509 450

## Beschreibung

Die Erfindung betrifft die Verwendung eines Kunststoff-Papierverbundes in Folienform zur Herstellung von aufgrund einer Acrylatschicht witterungsbeständigen Schichtpreßstoffplatten gemäß Oberbegriff von Patentanspruch 1.

### Stand der Technik

Schichtpreßstoffplatten werden durch Verpressen eines Stapels bestehend aus mehreren beharzten Papierbahnen hergestellt. Für dekorative Zwecke kann dabei an einer oder beiden Oberflächenseiten des Stapels, welcher beispielsweise aus mehreren mit Phenolharz imprägnierten Papieren gebildet wird, eine mit Melaminharz imprägnierte Dekorpapierbahn angeordnet und anschließend mitverpreßt werden. Durch diese Maßnahme wird der Schichtpreßstoffplatte eine sehr harte, kratzfeste und stark beanspruchbare Dekoroberfläche verliehen.

Diese dekorativen Schichtpreßstoffplatten finden nun im Innenbereich für die Herstellung von Möbeln aber auch im Außenbereich Anwendung. Bei der Anwendung im Außenbereich hat es sich jedoch gezeigt, daß die dekorativen Schichtpreßstoffplatten durch den Wettereinfluß auskreiden, wodurch der optische Eindruck des
Dekors wesentlich verschlechtert wird.

Es stellt nunmehr eine bekannte Aufgabe dar, dekorative Schichtpreßstoffplatten für ihre Verwendung im Außenbereich witterungsbeständig herzustellen. Dabei kann der Witterungsschutz durch eine Lackschicht oder eine Folie gebildet werden. Als bevorzugte Materialien werden solche auf Basis von Acrylharzen eingesetzt, wodurch ein dauerhafter Witterungsschutz gewährleistet ist. Bei der Verwendung von Acrylharz-Lacken für die Herstellung der witterungsbeständigen Außenschichten werden gemäß der EP-A-281586 eine oder beide Außenlagen des aus mit Kunstharz imprägnierten Papierlagen gebildeten Stapels mit Acrylharz-Lack beschichtet und anschließend in einer Presse bei erhöhtem Druck und erhöhter Temperatur verpreßt. Dabei weisen die Acrylharz-Lackschichten den Nachteil auf, daß sie an den Preßmedien wie Stahlblechen, Matrizen oder Trennpapieren kleben können, was zur Ausbildung von dekorativen Oberflächen mit unzureichenden optischen Eigenschaften führt.

Gemäß der EP-A-216 230 werden daher mehrschichtige Trennfolien eingesetzt, welche neben dem erforderlichen Trenneffekt zu den Preßmedien gleichzeitig als Strukturgeber dienen.

Bei der Verwendung von Folien beispielsweise auf Acrylatbasis hat es sich erwiesen, daß diese beim Preßvorgang schwer hantierbar sind, da sie leicht reißen, Falten bilden sowie einrollen. Dies führt oft zu personalaufwendigen sowie fehleranfälligen Herstellungsprozessen.

Ferner ist es bekannt, Kunststoffolien als Trägermaterialien für witterungsbeständige Lacke, insbesondere Acrylharzlacke einzusetzen, diese ein- oder beidseitig an den Stapel bestehend aus mit Kunstharz imprägnierten Papierlagen anzubringen und mit diesem gemeinsam zu verpressen. Nach dem Preßvorgang wird das Trägermaterial von der Acrylharzschicht, welche nun die witterungsbeständige Außenschicht der Schichtpreßstoffplatte bildet, abgezogen. Eine derartige Transfertechnik ist beispielsweise in der WO-A1-90/14226 vorbeschrieben. Da diese Anordnung bestehend aus dem Trägermaterial und der Acrylharzschicht sehr dünn ist, ist sie schwer hantierbar und verrutscht leicht im Preßstapel. Ferner sind zusätzliche Strukturgeber wie Preßbleche oder Matrizen erforderlich, um eine dekorative Oberfläche der witterungsbeständigen Schichtpreßstoffplatte zu gewährleisten. Außerdem ist die Oberflächenhärte von Acrylharzschichten geringer als von Melaminoberflächen, sodaß es während des produktionsinternen Transports ebenso wie bei der Handhabung beim Anwender, beispielsweise beim Zuschnitt und bei der Montage von bis zu 70 kg schweren Platten, zu Beschädigungen der Acrylharzschicht kommen kann.

Aufgabe der Erfindung ist es nun, bei der eingangs genannten Verwendung von Kunststoffolien-Papierverbunden als Trägermaterialien für die als Witterungsschutz eingesetzte Acrylatschicht die bekannten Nachteile zu vermeiden. Bei dieser Verwendung soll der Kunststoffolien-Papierverbund - unbhängig von seiner Funktion als Trägermaterial - auch als Strukturgeber während des Preßvorgangs dienen und zusätzlich für die Platte einen mit dem Witterungsschutz versehenen, lösbaren Oberflächenschutz, beispielsweise für den Transport, bilden.

### Darstellung der Erfindung

Erfindungsgemäß wird diese Aufgabe durch die Verwendung eines Kunststoff-Papierverbundes gelöst, welcher eine Folienform aufweist und im wesentlichen aus einer Papierschicht, einer Polypropylenschicht sowie einer Polyesterschicht besteht, wobei die Polyesterschicht eine der beiden Oberfächenschichten des Kunststoff-Papierverbundes bildet und zur Herstellung einer aufgrund einer Acrylatschicht witterungsbeständigen Schichtpreßstoffplatte mit Oberflächenschutz dient wobei die erfindungsgemäße Verwendung dadurch gekennzeichnet ist, daß der Kunststoff-Papierverbund in Verbindung mit der Acrylatschicht in Folienform oder in Form eines Lackstriches zur Herstellung der witterungsbeständigen Schichtpreßstoffplatte verwendet wird, daß dieser bis zur Verwendung der witterungsbeständigen Schichtpreßstoffplatte als Oberflächenschutz dient und erst bei deren Verwendung von der Acrylatschicht abgezogen wird.

Ferner ist die erfindungsgemäße Verwendung dadurch gekennzeichnet, daß die Schichten im verwendeten Kunststoff-Papierverbund miteinander mittels eines nicht-thermoplastischen Klebers verbunden sind, welcher vorteilhafterweise ein Acrylatkleber ist.

Bei der erfindungsgemäßen Verwendung weist der Kunststoff-Papierverbund eine Polyesterschicht auf, die aus Polyethylenterephthalat besteht.

Weitere vorteilhafte Merkmale der erfindungsgemäßen Verwendung des Kunststof-Papierverbundes bestehen darin, daß die Dicke der Polyethylenterephthalatschicht 6 bis 100 *µ*m, vorzugsweise 12 bis 25 *µ*m, daß das im verwendeten Kunststoff-Papierverbund eingesetzte Papier ein Gewicht von 25 bis 240 g/m³, vorzugsweise 30 bis 100 g/m³, und die Dicke der Polypropylenschicht 12 bis 100 µm, vorzugsweise 12 bis 25*µ*m, aufweisen.

Die Erfindung betrifft ferner ein Verfahren zur Herstellung einer aufgrund einer Acrylatschicht witterungsbeständigen Schichtpreßstoffplatte mit einem Oberflächenschutz, wobei auf einen gemäß Ansprüche 1 bis 7 als Oberflächenschutzschicht verwendeten Kunststoff-Papierverbund eine Acrylatschicht in Form einer Folie ohne Haftvermittler kaschiert wird, daß der auf diese Weise hergestellte Folienverbund ein- oder beidseitig mit mehreren mit Kunstharz imprägnierten Papieren zu einem Stapel verschlichtet wird, wobei die Acrylatschicht(en) an der (den) äußersten Papierlage(n) anliegt (anliegen), daß dieser Stapel dann unter Druck und erhöhter Temperatur verpreßt wird, sodaß eine mit einem Oberflächenschutz versehene Schichtpreßstoffplatte erzeugt wird, an der an einer oder beiden Außenschichten der hergestellte Kunststoff-Papierverbund auf der als Witterungsschutz dienenden Acrylatschicht angebracht ist und daß bei der Verwendung der hergestellten mit einem Oberflächenschutz versehenen Schichtpreßstoffplatte der Kunststoff-Papierverbund von der Acrylatschicht abgezogen wird, sodaß eine mit einem Witterungsschutz versehene Schichtpreßstoffplatte erzeugt wird.

Eine weitere Variante des erfindungsgemäßen Verfahrens besteht in der Herstellung einer aufgrund einer Acrylatschicht witterungsbeständigen Schichtpreßstoffplatte mit einem Oberflächenschutz, wobei a) auf die Polyesterschicht eines gemäß Ansprüche 1 bis 7 als Oberflächenschutzschicht verwendeten Kunststoff-Papierverbundes für die Ausbildung der Oberflächenschutzschicht eine Acrylatschicht in Form eines Lackstriches aufgebracht wird und b) dieser Verbund mit mehreren mit Kunstharz imprägnierten Papieren zu einem Stapel ein- oder beidseitig verschlichtet wird, wobei die Acrylatschicht(en) an der (den) äußersten Papierlage(n) anliegt (anliegen) und daß c) dieser Stapel unter Druck und erhöhter Temperatur verpreßt wird, sodaß eine mit einem Oberflächenschutz versehene Schichtpreßstoffplatte erzeugt wird, an der an einer oder beiden Außenschichten der Kunststoff-Papierverbund auf der als Witterungsschutz dienenden Acrylatschicht für die Ausbildung der Oberflächenschutzschicht angebracht ist und daß d) bei der Verwendung der gemäß c) hergestellten mit einem Oberflächenschutz versehenen Schichtpreßstoffplatte der Kunststoff-Papierverbund von der Acrylatschicht abgezogen wird, sodaß eine mit einem Witterungsschutz versehene Schichtpreßstoffplatte erzeugt wird.

Bei diesem erfindungsgemäßen Verfahren zur Herstellung witterungsbeständiger Schichtpreßstoffplatten mit einem Oberflächenschutz erfüllt der Kunststoff-Papierverbund die Funktion eines Trägers für die witterungsbeständige Außenschicht in Form der Acrylatschicht und ist ferner Oberflächenschutz beispielsweise gegen Schäden der Acrylatschicht während des Transportes für die durch den Preßvorgang hergestellte Schichtpreßstoffplatte. Überraschenderweise wurde gefunden, daß während des Preßvorgangs zwischen der Polyethylenterephthalatschicht und der Acrylatschicht eine gute adhäsive Haftung ohne Zusatz von Haftvermittlern entsteht, die dennoch bei der Anwendung der witterungsbeständigen Schichtpreßstoffplatte beispielsweise vor der Montage durch vollständiges, aber zähes Abziehen der Polyethylenterephthalatschicht gelöst werden kann.

Ferner ist der Kunststoff-Papierverbund ein Strukturgeber für die Oberflächenbeschaffenheit der Dekorschicht, sodaß der Einsatz zusätzlicher Strukturgeber, beispielsweise in Form von strukturierten Preßblechen entfallen kann.

Die Strukturgebung erfolgt durch die Dicke und Rauhigkeit der Papierschicht sowie deren Kollerung (Faserung). Sollten die strukturgebenden Eigenschaften zu stark ausgeprägt sein, so kann nach einer vorteilhaften Ausgestaltung die Reihenfolge Papier - Polypropylen gegeneinander ausgetauscht werden, sodaß die Polypropylenschicht näher an der zu dekorierenden Oberfläche anliegt.

Ferner betrifft die Erfindung ein Verfahren zur Herstellung einer aufgrund einer Acrylatschicht witterungsbeständigen Schichtpreßstoffplatte mit einem Oberflächenschutz, wobei a) ein Stapel aus mehreren Lagen mit Kunstharz imprägnierten Papieren gebildet wird und eine oder beide Außenlagen mit einem Lackstrich auf Basis eines Acrylatharzes für die Ausbildung der Oberflächenschutzschicht versehen wird (werden), daß b) bei der Verwendung eines Kunststoff-Papierverbundes als Oberflächenschutzschicht gemäß einem der Ansprüche 1 bis 7 dieser an den gemäß a) gebildeten Stapel ein- oder beidseitig angebracht wird, wobei die Polyesterschicht des verwendeten Kunststoff-Papierverbundes an der(den) Acrylatschicht(en) anliegt (anliegen) und c) daß der gemäß b) gebildete Stapel unter Druck und erhöhter Temperatur verpreßt wird, sodaß eine mit einem Oberflächenschutz versehene Schichtpreßstoffplatte erzeugt wird und daß d) bei der Verwendung der gemäß c) hergestellten, mit einem Oberflächenschutz versehenen Schichtpreßstoffplatte der Kunststoff-Papierverbund von der Acrylatschicht abgezogen wird, sodaß eine mit einem Witterungsschutz versehene Schichtpreßstoffplatte erzeugt wird.

Gemäß diesem erfindungsgemäßen Verfahren erfüllt der Kunststoff-Papierverbund die Funktion des Oberflächenschutzes sowie des Strukturgebers.

### Kurze Beschreibung der Zeichnungen sowie einige Beispiele zur Ausführung der Erfindung

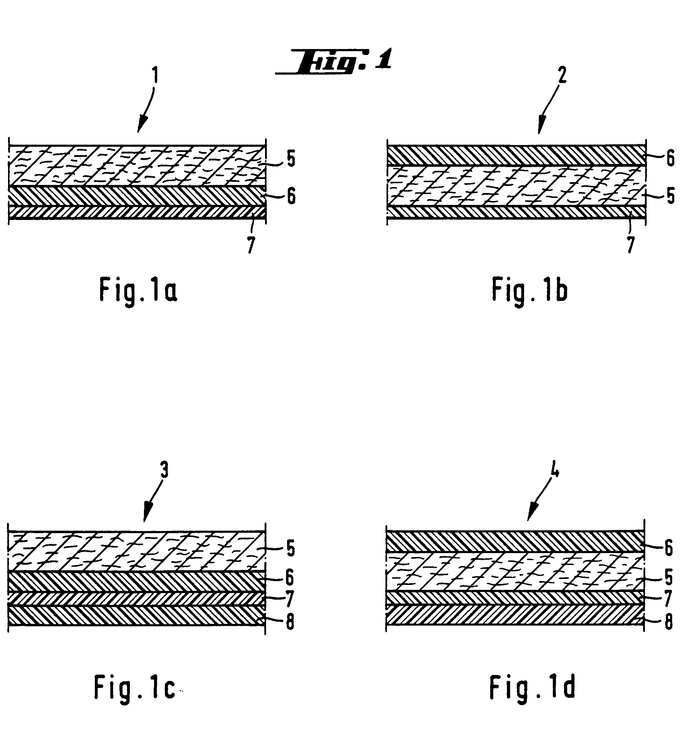

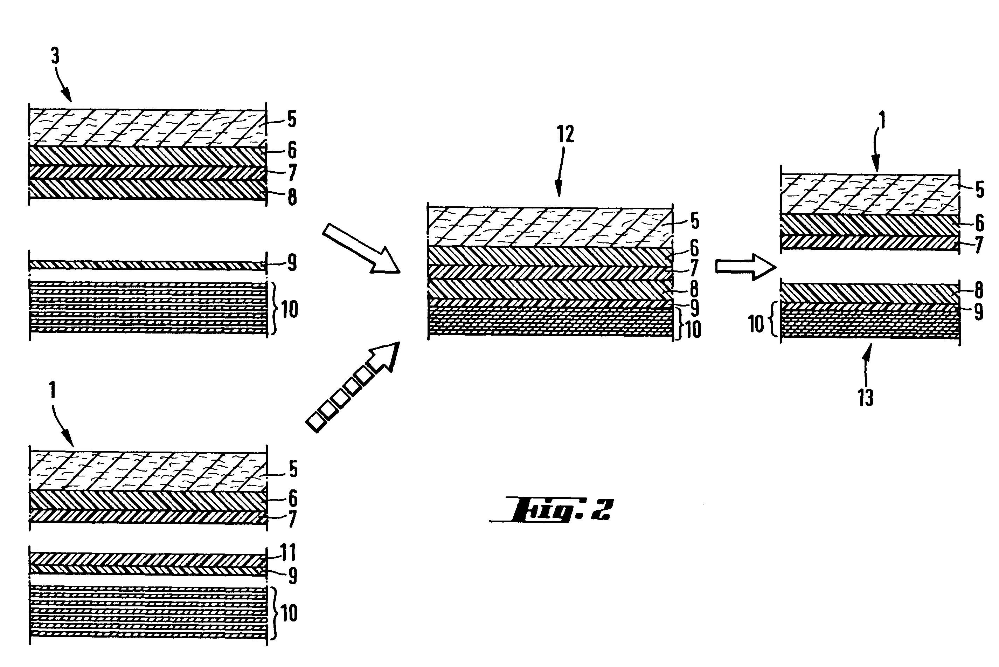

Die Erfindung wird anhand der Figuren 1 und 2 sowie der Ausführungsbeispiele 1 bis 3 näher erläutert.

Fig. 1 zeigt einen Kunststoff-Papierverbund gemäß den Varianten nach Fig.1a, Fig.1b, Fig.1c und Fig.1d.

In Fig. 1a wird der Kunststoff-Papierverbund 1, bestehend aus der Papierschicht 5, der Polypropylenschicht 6 und der Polyethylenterephthalatschicht 7, beschrieben.

Gemäß Fig.1b wird der Kunststoff-Papierverbund 2 beschrieben, welcher aus der Polypropylenschicht 6, der Papierschicht 5 und der Polyethylenterephthalatschicht 7 besteht.

Gemäß Fig.1c wird der Kunststoff-Papierverbund 3, bestehend aus einem Kunststoff-Papierverbund gemäß Fig.1a, beschrieben, wobei an die Polyethylenterephthalatschicht 7 die Acrylatschicht 8 anschließt.

In Fig. 1d wird der Kunststoff-Papierverbund 4 beschrieben, welcher die Form des Kunststoff-Papierverbundes gemäß Fig.1b aufweist, wobei an die Polyethylenterephthalatschicht 7 die Acrylatschicht 8 anschließt.

Gemäß Fig. 2 wird in schematischer Darstellung die Herstellung einer mit einem Oberflächenschutz versehenen Schichtpreßstoffplatte 12 angeführt, aus der eine mit einem Witterungsschutz versehene Schichtpreßstoffplatte 13 hergestellt werden kann.

Ferner ist schematisch dargestellt, daß gemäß den Beispielen 1 und 2 von einem Kunststoff-Papierverbund 3 sowie einer mit Melaminharz imprägnierten Dekorschicht bzw. mit Barriere-Papieren 9 versehenen Oberfläche und einer Vielzahl von mit Phenolharz imprägnierten Papieren 10 zur Bildung eines Stapels ausgegangen werden kann, welcher zur Herstellung der mit dem Oberflächen- und/oder Witterungsschutz versehenen Schichtpreßstoffplatte 12 führt.

Gemäß Beispiel 3 ist schematisch dargestellt, daß zur Bildung von 12 von einem Kunststoff-Papierverbund 1 ausgegangen werden kann, welcher mit einem Stapel bestehend aus einer mit Melaminharz imprägnierten Dekorschicht 9, welche mit einer Acrylatschicht 11 versehen ist, und einer Vielzahl von mit Phenolharz imprägnierten Papierbahnen 10 zu der witterungsbeständigen Schichtpreßstoffplatte mit Oberflächenschutz verpreßt wird.

### Ausführungsbeispiele 1 bis 3:

### Ausführungsbeispiel 1

Gemäß einer erfindungsgemäßen Verfahrensvariante wird eine witterungsbeständige Schichtpreßstoffplatte 12 mit einem Oberflächenschutz hergestellt. Im Anwendungsfall wird durch Abziehen des Verbundes 1 gemäß Fig. 2 die mit einem Witterungsschutz versehene Schichtpreßstoffplatte 13 gebildet. Das Verfahren besteht aus folgenden Verfahrensschritten:
a) Es wird ein Kunststoff-Papierverbund 3, bestehend aus einer Papierschicht 5 in der Dicke von 65 *µ*m, einer Polypropylenschicht 6 in einer Dicke von 30 *µ*m und einer Polyethylenterephthalatschicht 7 mit der Dicke von 12 *µ*m formatiert. Die Schichten 5, 6 und 7 sind untereinander mit einem nicht-thermoplastischen Kleber wie einen Acrylatkleber verbunden. An diesen Kunststoff-Folienverbund 3 wird an der Polyethylenterephthalatseite 7 eine Acrylatfolie 8 durch Kaschieren aufgebracht, wobei der Kaschierschritt ohne Zusatz von Haftvermittlern erfolgt und ein Kunststoff-Papierverbund gemäß Fig. lc gebildet wird. Die eingesetzte Acrylatfolie 8 kann farblos sein für den Fall, daß eine mit einem Dekor versehene, mit Melaminharz imprägnierte Schicht 9 eingesetzt wird; sie kann jedoch selbst als Dekorträger fungieren, wobei die Dekorschicht 9 in Form der mit Melaminharz imprägnierten Papierlage wegfallen kann.
b) Es wird ein Lagenstapel, welcher in der Folge in den Preßschritt eingesetzt wird, gebildet. Die Reihenfolge der Lagen von Preßplatte zu Preßplatte in diesem Stapel lautet wie folgt:
   Stahlblech
   Kunststoff-Papierverbund 3
      (mit Melaminharz imprägniertes Dekorpapier oder Barrierepapier 9)
   mit Phenolharz imprägnierte Kernpapierlagen 10 (beharztes Dekorpapier oder Barriere-Papier 9)
   Kunststoff-Papierverbund 3
   Stahlblech

   Bei der Verwendung einer dekorierten Acrylatfolie können die Lagen 9 in dem Stapel entfallen.
c) Der im Verfahrensschritt b) gebildete Lagenstapel wird in eine Hochdruckpresse eingefahren.
d) Bei einer Temperatur von 130 - 150°C und einem Druck von etwa 70 bar wird der Lagenstapel, welcher gemäß b) gebildet wurde, verpreßt, sodaß die Kunstharze der Papierbahnen aushärten und gleichzeitig der Kunststoff-Papierverbund 3 über die Acrylatschicht an der äußersten, mit Kunstharz imprägnierten Papierlage anhaftet und an dieser bleibend für die weiteren Verarbeitungsschritte fixiert wird.
e) Der gemäß d) gebildete Verbund wird in Form der witterungsbeständigen Schichtpreßstoffplatte 12 mit Oberflächenschutz auf Raumtemperatur rückgekühlt und aus der Hochdruckpresse ausgefahren.
f) Die Schichtpreßstoffplatte 12 wird besäumt, geschliffen und auf das gewünschte Format zugeschnitten und kann nunmehr gelagert bzw. für die weitere Verwendung geliefert werden.
g) Bei der weiteren Verwendung der Schichtpreßstoffplatte 12 wird der Verbund 1 von der Acrylatschicht 8 abgezogen, sodaß die mit dem Witterungsschutz versehene Schichtpreßstoffplatte 13 gebildet wird.

### Ausführungsbeispiel 2

### Verfahrensschritt a)

Es wird ein Kunststoff-Papierverbund 1 an der Polyethylenterephthalatschicht 7 mit einem Lackstrich 8 auf Acrylatbasis versehen, wodurch der Kunststoff-Papierverbund 3 gemäß Fig. lc gebildet wird. Die Verfahrensschritte b) bis g) werden wie im Ausführungsbeispiel 1 durchgeführt.

### Ausführungsbeispiel 3

### Verfahrensschritt a)

Es wird eine Vielzahl von mit Kunstharzen imprägnierten Papierbahnen aufeinandergestapelt, wobei die äußere Schicht, welche eine Kernpapierlage gemäß 10 oder eine mit Melaminharz imprägnierte Dekorpapierlage 9 sein kann, mit der Acrylharzschicht 11 versehen wird.

b) Es wird ein Lagenstapel in der folgenden Reihenfolge gebildet:
Stahlblech
Verbund 1
mit Melaminharz imprägnierte Dekorschicht 9, welche mit einer Acrylharz-Lackstrich 11 versehen ist
mit Phenolharz imprägnierte Kernpapierlagen 10
mit Melaminharz imprägniertes Dekorpapier 9, welches mit einer Acrylharz-Lackschicht versehen wurde
Verbund 1
Stahlblech

Die Verfahrensschritte c) bis g) werden wie im Ausführungsbeispiel 1 durchgeführt.

Die Ausführungsbeispiele sollen lediglich erläuternden, jedoch nicht einschränkenden Charakter haben.

### Gewerbliche Anwendbarkeit

Die erfindungsgemäße Verwendung eines Kunststoff-Papierverbundes wird vorteilhafterweise zur Herstellung einer witterungsbeständigen Schichtpreßstoffplatte mit einem Oberflächenschutz ausgenützt. Die Witterungsbeständigkeit ist durch eine Acrylschicht gewährleistet. Den Oberflächenschutz stellt der Kunststoff-Papierverbund dar, sodaß die mit der Acrylatschicht versehene und dadurch witterungsbeständige Schichtpreßstoffplatte gegen Beschädigungen, beispielsweise während des Transportes, geschützt ist.

## Patentansprüche

1. Verwendung eines Kunststoff-Papierverbundes in Folienform bestehend im wesentlichen aus einer Papierschicht, einer Polypropylenschicht sowie einer Polyesterschicht, welche eine der beiden Oberflächenschichten des Kunststoff-Papierverbundes bildet, zur Herstellung einer aufgrund einer Acrylatschicht witterungsbeständigen Schichtpreßstoffplatte, dadurch gekennzeichnet, daß der Kunststoff-Papierverbund in Verbindung mit der Acrylatschicht in Folienform oder in Form eines Lackstriches zur Herstellung der witterungsbeständigen Schichtpreßstoffplatte verwendet wird, daß dieser bis zur Verwendung der witterungsbeständigen Schichtpreßstoffplatte als Oberflächenschutz dient und erst bei deren Verwendung von der Acrylatschicht abgezogen wird.

2. Verwendung eines Kunststoff-Papierverbundes nach Anspruch 1, dadurch gekennzeichnet, daß die Schichten im verwendeten Kunststoff-Papierverbund miteinander mittels eines nicht-thermoplastischen Klebers verbunden sind.

3. Verwendung eines Kunststoff-Papierverbundes nach Anspruch 2, dadurch gekennzeichnet, daß der nicht-thermoplastische Kleber ein Acrylatkleber ist.

4. Verwendung eines Kunststoff-Papierverbundes nach einem der Ansprüche 1 bis 3, dadurch gekennzeichnet, daß die Polyesterschicht im verwendeten Kunststoff-Papierverbund aus Polyethylenterephthalat besteht.

5. Verwendung eines Kunststoff-Papierverbundes nach Anspruch 4, dadurch gekennzeichnet, daß die Polyethylenterephthalatschicht eine Dicke von 6 bis 100 *µ*m, vorzugsweise 12 bis 25 um aufweist.

6. Verwendung eines Kunststoff-Papierverbundes nach einem der Ansprüche 1 bis 5, dadurch gekennzeichnet, daß das im verwendeten Kunststoff-Papierverbund eingesetzte Papier ein Gewicht von 25 bis 240 g/m³, vorzugsweise 30 bis 100 g/m³ aufweist.

7. Verwendung eines Kunststoff-Papierverbundes nach einem der Ansprüche 1 bis 6, dadurch gekennzeichnet, daß im verwendeten Kunststoff-Papierverbund die Dicke der Polypropylenschicht 12 bis 100 *µ*m, vorzugsweise 12 bis 25*µ*m beträgt.

8. Verfahren zur Herstellung einer aufgrund einer Acrylatschicht witterungsbeständigen Schichtpreßstoffplatte mit Oberflächenschutz, dadurch gekennzeichnet, daß
a) auf einen gemäß Ansprüche 1 bis 7 als Oberflächenschutzschicht verwendeten Kunststoff-Papierverbund eine Acrylatschicht in Form einer Folie ohne Haftvermittler kaschiert wird, daß
b) der gemäß a) hergestellte Folienverbund ein- oder beidseitig mit mehreren mit Kunstharz imprägnierten Papieren zu einem Stapel verschlichtet wird, wobei die Acrylatschicht(en) an der (den) äußersten Papierlage(n) anliegt (anliegen), daß
c) dieser gemäß b) gebildete Stapel unter Druck und erhöhter Temperatur verpreßt wird, sodaß eine mit einem Oberflächenschutz versehene Schichtpreßstoffplatte erzeugt wird, an der an einer oder beiden Außenschichten, der gemäß a) hergestellte Kunststoff-Papierverbund auf der als Witterungsschutz dienenden Acrylatschicht angebracht ist und daß
d) bei der Verwendung der gemäß c) hergestellten mit einem Oberflächenschutz versehenen Schichtpreßstoffplatte der Kunststoff-Papierverbund von der Acrylatschicht abgezogen wird, sodaß eine mit einem Witterungsschutz versehene Schichtpreßstoffplatte erzeugt wird.

9. Verfahren zur Herstellung einer aufgrund einer Acrylatschicht witterungsbeständigen Schichtpreßstoffplatte mit Oberflächenschutz, dadurch gekennzeichnet, daß
a) auf die Polyesterschicht eines gemäß Ansprüche 1 bis 7 als Oberflächenschutzschicht verwendeten Kunststoff-Papierverbundes eine Acrylatschicht in Form eines Lackstriches aufgebracht wird, daß
b) der gemäß a) hergestellte Verbund mit mehreren mit Kunstharz imprägnierten Papieren zu einem Stapel ein- oder beidseitig verschlichtet wird, wobei die Acrylatschicht(en) an der (den) äußersten Papierlage(n) anliegt (anliegen), daß
c) dieser gemäß b) gebildete Stapel unter Druck und erhöhter Temperatur verpreßt wird, sodaß eine mit einem Oberflächenschutz versehene Schichtpreßstoffplatte erzeugt wird, an der an einer oder beiden Außenschichten, der gemäß a) hergestellte Kunststoff-Papierverbund auf der als Witterungsschutz dienenden Acrylatschicht angebracht ist und daß
d) bei der Verwendung der gemäß c) hergestellten mit einem Oberflächenschutz versehenen Schichtpreßstoffplatte der Kunststoff-Papierverbund von der Acrylatschicht abgezogen wird, sodaß eine mit einem Witterungsschutz versehene Schichtpreßstoffplatte erzeugt wird.

10. Verfahren zur Herstellung einer aufgrund einer Acrylatschicht witterungsbeständigen Schichtpreßstoffplatte mit Oberflächenschutz, dadurch gekennzeichnet, daß
a) ein Stapel aus mehreren Lagen mit Kunstharz imprägnierten Papieren gebildet wird, wobei eine oder beide Außenlagen mit einem Lackstrich auf Basis eines Acrylatharzes versehen wird (werden), daß
b) bei der Verwendung eines Kunststoff-Papierverbundes als Oberflächenschutzschicht gemäß einem der Ansprüche 1 bis 7 dieser an den gemäß a) gebildeten Stapel ein- oder beidseitig angebracht wird, wobei die Polyesterschicht des verwendeten Kunststoff-Papierverbundes an der(den) Acrylatschicht(en) anliegt, daß
c) der gemäß b) gebildete Stapel unter Druck und erhöhter Temperatur verpreßt wird, sodaß eine mit einem Oberflächenschutz versehene Schichtpreßstoffplatte erzeugt wird und daß
d) bei der Verwendung der gemäß c) hergestellten mit einem Oberflächenschutz versehenen Schichtpreßstoffplatte der Kunststoff-Papierverbund von der Acrylatschicht abgezogen wird, sodaß eine mit einem Witterungsschutz versehene Schichtpreßstoffplatte erzeugt wird.

## Claims

1. Use of a plastics-paper composite in film form substantially comprising a paper layer, a polypropylene layer and a polyester layer, which forms one of the two surface layers of the plastics-paper composite, to produce a weather-resistant laminated sheet based on an acrylate layer, characterised in that the plastics-paper composite is used in conjunction with the acrylate layer in film form or in the form of a lacquer coating to produce the weather-resistant laminated sheet, in that the plastics-paper composite acts as the surface-protection until the weather-resistant laminated sheet is used and is not removed from the acrylate layer until the laminated sheet is used.

2. Use of a plastics-paper composite according to claim 1, characterised in that the layers in the plastics-paper composite used are connected to each other by means of a non-thermoplastics adhesive.

3. Use of a plastics-paper composite according to claim 2, characterised in that the non-thermoplastics adhesive is an acrylate adhesive.

4. Use of a plastics-paper composite according to any one of claims 1 to 3, characterised in that the polyester layer in the plastics-paper composite used comprises polyethylene terephthalate.

5. Use of a plastics-paper composite according to claim 4, characterised in that the polyethylene terephthalate layer has a thickness of from 6 to 100 µm, preferably of from 12 to 25 µm.

6. Use of a plastics-paper composite according to any one of claims 1 to 5, characterised in that the paper used in the plastics-paper composite used has a weight of from 25 to 240 g/m³, preferably of from 30 to 100 g/m³.

7. Use of a plastics-paper composite according to any one of claims 1 to 6, characterised in that, in the plastics-paper composite used, the thickness of the polypropylene layer is from 12 to 100 µm, preferably from 12 to 25 µm.

8. Method for the production of a weather-resistant laminated sheet which is based on an acrylate layer and which has surface protection, characterised in that
a) an acrylate layer in the form of a film is laminated without any adhesive agent onto a plastics-paper composite used as a surface protection layer according to claims 1 to 7,
b) the film composite produced according to a) is arranged with several layers of paper, impregnated with synthetic resin, on one side or both sides to form a stack, the acrylate layer(s) abutting the outermost paper layer(s),
c) that stack formed according to b) is compressed under pressure and at elevated temperature so that there is produced a laminated sheet which is provided with surface protection and to which is applied, on one or both outer layers, the plastics-paper composite, produced according to a), on the acrylate layer which acts as the weather protection and
d) when the laminated sheet produced according to c) and provided with surface protection is used, the plastics-paper composite is removed from the acrylate layer so that a laminated sheet provided with weather protection is produced.

9. Method for the production of a weather-resistant laminated sheet which is based on an acrylate layer and which has surface protection, characterised in that
a) an acrylate layer in the form of a lacquer coating is applied to the polyester layer of a plastics-paper composite used as a surface protection layer according to claims 1 to 7,
b) the composite produced according to a) is arranged with several layers of paper, impregnated with synthetic resin, on one or both sides to form a stack, the acrylate layer(s) abutting the outermost paper layer(s),
c) that stack formed according to b) is compressed under pressure and at elevated temperature so that there is produced a laminated sheet which is provided with surface protection and to which is applied, on one or both outer layers, the plastics-paper composite, produced according to
a) on the acrylate layer which acts as the weather protection and
d) when the laminated sheet produced according to c) and provided with surface protection is used, the plastics-paper composite is removed from the acrylate layer so that a laminated sheet provided with weather protection is produced.

10. Method for the production of a weather-resistant laminated sheet which is based on an acrylate layer and which has surface protection, characterised in that
a) a stack comprising several layers of paper impregnated with synthetic resin is formed, one or both outer layers being provided with a lacquer coating on an acrylate resin base,
b) when a plastics-paper composite is used as the surface protection layer according to any one of claims 1 to 7, the plastics-paper composite is applied, on one or both sides, to the stack formed according to a), the polyester layer of the plastics-paper composite used abutting the acrylate layer(s),
c) that stack formed according to b) is compressed under pressure and at elevated temperature so that there is produced a laminated sheet which is provided with surface protection and
d) when the laminated sheet produced according to c) and provided with surface protection is used, the plastics-paper composite is removed from the acrylate layer so that a laminated sheet provided with weather protection is produced.

## Revendications

1. Utilisation d'un matériau composite plastique-papier sous forme de feuille, comprenant essentiellement une couche de papier, une couche de polypropylène ainsi qu'une couche de polyester, qui constitue l'une des deux couches superficielles du matériau composite matière plastique-papier, pour fabriquer une plaque stratifiée rendue stable aux intempéries au moyen d'une couche d'acrylates, caractérisée en ce qu'on utilise le matériau composite plastique-papier en liaison avec la couche d'acrylates se présentant sous la forme d'un film ou sous la forme d'une couche de vernis acrylique pour fabriquer la plaque stratifiée stable aux intempéries, en ce que celui-ci sert de protection de surface jusqu'à la mise en oeuvre de la plaque stratifiée stable aux intempéries et en ce qu'on le décolle de la couche d'acrylates seulement au moment de l'utilisation de la plaque stratifiée stable aux intempéries.

2. Utilisation d'un matériau composite plastique-papier selon la revendication 1, caractérisée en ce que les couches dans le matériau composite matière plastique-papier, sont liées l'une à l'autre au moyen d'un adhésif non thermoplastique.

3. Utilisation d'un matériau composite plastique-papier selon la revendication 2, caractérisée en ce que l'adhésif non thermoplastique.est un adhésif acrylique.

4. Utilisation d'un matériau composite plastique-papier selon une des revendications 1 à 3, caractérisée en ce que la couche de polyester dans le matériau composite matière plastique-papier utilisé est formée de poly(éthylène téréphtalate).

5. Utilisation d'un matériau composite plastique-papier selon la revendication 4, caractérisée en ce que la couche de poly(éthylène téréphtalate) a une épaisseur comprise dans une plage allant de 6 à 100 µm, de préférence de 12 à 25 µm.

6. Utilisation d'un matériau composite plastique-papier selon une des revendications 1 à 5, caractérisée en ce que le papier utilisé dans le matériau composite matière plastique-papier présente un grammage compris dans une plage allant de 25 à 240 g/m³, de préférence de 30 à 100 g/m³.

7. Utilisation d'un matériau composite plastique-papier selon une des revendications 1 à 6, caractérisée en ce que la couche de polypropylène utilisée dans le matériau composite matière plastique-papier présente une épaisseur comprise dans une plage allant de 12 à 100 µm, de préférence de 12 à 25 µm.

8. Procédé de fabrication d'une plaque stratifiée rendue stable aux intempéries au moyen d'une couche d'acrylates, pourvue d'une protection de surface, caractérisé
a) en ce que, sur un matériau composite plastique-papier utilisé comme protection de surface conformément aux revendications 1 à 7, on applique une couche d'acrylates sous la forme d'un film sans adhésif,
b) en ce qu'on dispose, d'un côté ou des deux côtés, le matériau composite plastique-papier fabriqué conformément au point a) en pile avec plusieurs feuilles de papier imprégnées de résine synthétique, la (les) couche(s) d'acrylates étant en contact avec la (les) couche(s) de papier extérieure(s),
c) en ce qu'on comprime la pile formée conformément au point b) sous une pression et sous une température élevée de manière à produire une plaque stratifiée pourvue d'une protection de surface, sur une ou sur les deux couche(s) extérieure(s) de laquelle est appliqué le matériau composite plastique-papier formé conformément au point a) et lié à la couche d'acrylates servant de protection contre les intempéries et
d) en ce que, lors de l'utilisation de la plaque stratifiée pourvue d'une protection de surface fabriquée conformément au point c), on retire le matériau composite plastique-papier de manière à obtenir une plaque stratifiée pourvue d'une protection contre les intempéries.

9. Procédé de fabrication d'une plaque stratifiée rendue stable aux intempéries au moyen d'une couche d'acrylates, pourvue d'une protection de surface, caractérisé
a) en ce que, sur la couche de polyester d'un matériau composite plastique-papier utilisé comme protection de surface conformément aux revendications 1 à 7, on applique une couche d'acrylates sous la forme d'une couche de vernis
b) en ce qu'on dispose, d'un côté ou des deux côtés, le matériau composite plastique-papier fabriqué conformément au point a) en pile avec plusieurs feuilles de papier imprégnées de résine synthétique, la (les) couche(s) d'acrylates étant en contact avec la (les) couche(s) de papier extérieure(s),
c) en ce qu'on comprime la pile formée conformément au point b) sous une pression et sous une température élevée de manière à produire une plaque stratifiée pourvue d'une protection de surface, sur une ou sur les deux couche(s) extérieure(s) de laquelle est appliqué le matériau composite plastique-papier formé conformément au point a) et lié à la couche d'acrylates servant de protection contre les intempéries et
d) en ce que, lors de l'utilisation de la plaque stratifiée pourvue d'une protection de surface fabriquée conformément au point c), on retire le matériau composite plastique-papier, de manière à obtenir une plaque stratifiée pourvue d'une protection contre les intempéries.

10. Procédé de fabrication d'une plaque stratifiée rendue stable aux intempéries au moyen d'une couche d'acrylates, pourvue d'une protection de surface, caractérisé
a) en ce qu'on forme une pile avec plusieurs feuilles de papier imprégnées de résine synthétique, l'une des couches ou les deux couches extérieures étant pourvue(s) d'une couche de vernis à base d'une résine acrylique
b) en ce que dans le cas de l'utilisation d'un matériau composite plastique-papier comme protection de surface conformément aux revendications 1 à 7, celui-ci est appliqué d'un côté ou des deux côtés de sur la pile formée conformément au point a), la couche de polyester du matériau composite plastique-papier étant en contact avec la (les) couche(s) d'acrylates,
c) en ce qu'on comprime la pile formée conformément au point b) sous une pression et sous une température élevée de manière à produire une plaque stratifiée pourvue d'une protection de surface,
d) en ce que, lors de l'utilisation de la plaque stratifiée pourvue d'une protection de surface fabriquée conformément au point c), on retire le matériau composite plastique-papier, de manière à obtenir une plaque stratifiée pourvue d'une protection contre les intempéries.
